# EUROPEAN PATENT APPLICATION

(11) **EP 4 389 970 A1**
(43) Date of publication of application: **26.06.2024**
(21) Application number: 22216373.5
(22) Date of filing: 23.12.2022
(51) Int. Cl.: D21H 17/65, D21H 17/70, D21H 27/06, D21H 27/10, D21H 27/16, D21H 27/30

(54) **RECYCLABLE CELLULOSE-BASED SUBSTRATE COMPRISING CELLULOSIC FIBRES AND NON-FIBROUS CELLULOSIC MATERIAL**

(71) Applicant: Ahlstrom Oyj, 00100 Helsinki (FI)
(72) Inventor: Bardet, Raphaël, 38500 Voiron (FR); Cartier, Noël, 38200 Jardin (FR); Paquet, Olivier, 38200 Jardin (FR)
(74) Representative: Hoffmann Eitle

(57) **Abstract**

The present invention relates to a cellulose-based substrate comprising native cellulosic fibres and non-fibrous cellulosic material, wherein the substrate is recyclable by repulping with at least 50 wt% of the substrate being recoverable according to EN13430, a method for preparing a cellulose-based substrate, a method for processing the cellulose-based substrate, and use of the cellulose-based substrate for packaging.

## Description

### Technical field

The present invention relates to a recyclable cellulose-based substrate that may be used as a packaging material. Further aspects of the present invention relate to methods for preparing said cellulose-based substrate and products derived from the same.

### Background art

Packaging materials cause a large amount of waste, which many countries presently try to reduce by recycling. Recyclable materials are advantageous because they extend the lifetime of raw materials. In the case of recycling cellulose-based materials, e.g. by repulping, this can reduce the need for further growing and harvesting of natural cellulose sources. Accordingly, recycling by repulping promises economic and ecological gains.

Parchment papers offer several advantages as packaging materials, such as providing grease-proofness and water proofness, providing a gas barrier, and biodegradability and/or compostability. Moreover, parchment-based products are generally considered food contact safe and have been used by consumers for packaging and or preparing food products for a long time. Parchment-based products can also be processed in multiple ways, such as printing labels on the product.

Whilst they are generally biodegradable and/or compostable, parchment-based materials are generally not recyclable, because the fibres are bonded together too strongly in an amorphous gel-like state. In other words, the advantageous properties of parchment-based food materials are concomitant with reduced recyclability and lower economic and ecological gains. Alternatively, layered products, e.g. in which a polymeric film is glued to a cellulose-based substrate require further compounds and processing steps, which also creates negative environmental and economic impact.

EP 3 819 426 discloses a highly parchmentized cellulose-based paper with very low oxygen transmission rates. Whilst the material is compostable and/or biodegradable, the repulpability of this material may be impacted owing to the fact that the fibres are embedded in a continuous cellulosic fibre matrix comprising non-fibrous cellulosic material.

US 2,023,711 discloses attempts to prepare a partially parchmentized paper substrate in which some cellulose-fibres are dissolved whereas others are not affected. This is achieved by passing the paper through a solution that protects the fibres from parchmentization first, so that only the uncoated fibres react with the parchmentizing acid. However, the initial coating with the protecting solution would further limit the recyclability and repulpability of the paper substrate.

There was thus still room for improvement and a need for a cellulose-based packaging product with improved recyclability by repulping that still offers the advantageous properties of parchment paper.

### Summary of the invention

The present invention solves the problems of the prior art by the following means.

In a first aspect, the present invention relates to a cellulose-based substrate comprising native cellulosic fibres and non-fibrous cellulosic material, wherein the substrate is recyclable by repulping with at least 50 wt% of the substrate being recoverable according to EN13430.

In a second aspect, the present invention relates to a method of preparing a substrate according to the first aspect, wherein the method comprises the steps of
(i) providing a cellulose-based substrate precursor material comprising native cellulosic fibres,
(ii) partially infiltrating the cellulose-based substrate precursor material with a gelatinizing agent, thereby submitting the cellulose-based substrate precursor material to a reaction with the gelatinizing agent to dissolve native cellulosic fibres, to give a partially treated cellulose-based substrate precursor material; and
(iii) submitting the partially treated cellulose-based substrate precursor material to a reprecipitation agent.

In a third aspect, the present invention relates to a method for processing the cellulose-based substrate according to the first aspect, wherein the processing comprises any of printing, laminating, coating, painting, spraying, binding, gluing, varnishing, impregnating, soaking, and/or binding.

In a fourth aspect, the present invention relates to a use of a cellulose-based substrate according to the first aspect for packaging.

### Brief description of the drawings

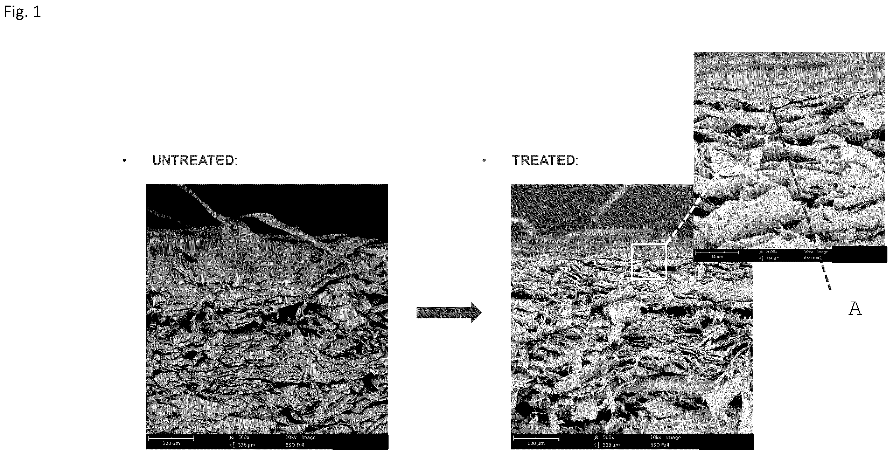

Fig.1 shows a scanning electron micrograph of the sample of Example 1 wherein the parchmentized portion comprising non-fibrous cellulosic material can be observed at the surface. The remaining fibres in the core region remain unchanged from the untreated fibres. The insert of region A further shows that the parchmentized portion comprising non-fibrous cellulosic material in the surface region is approximately 5-10 µm thick.

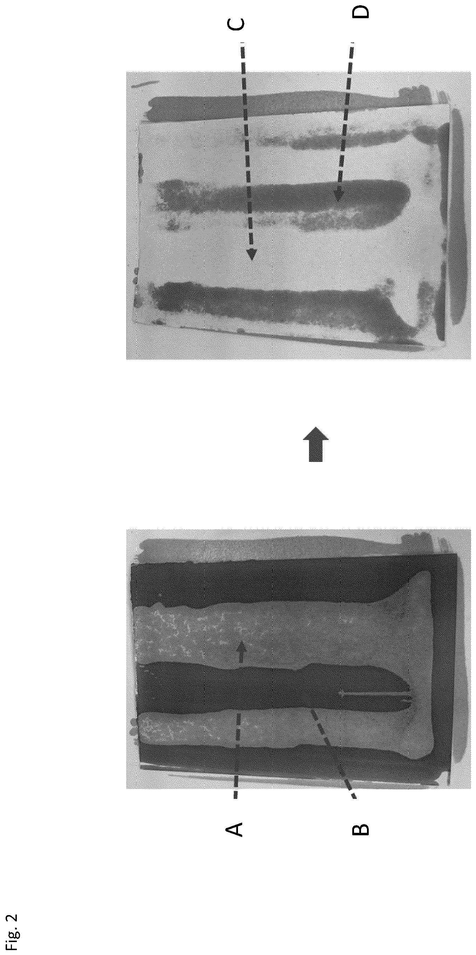

Fig. 2 shows the results of the grease resistance test carried out on the sample of Example 1. Region A shows a treated area, which is clearer because the dye was not absorbed. Region B is untreated which is darker because the dye was absorbed. The right-hand side picture shows the other side of the board. Region C is the treated area, where the dye did not penetrate. Region D is untreated and thus the dye penetrated.

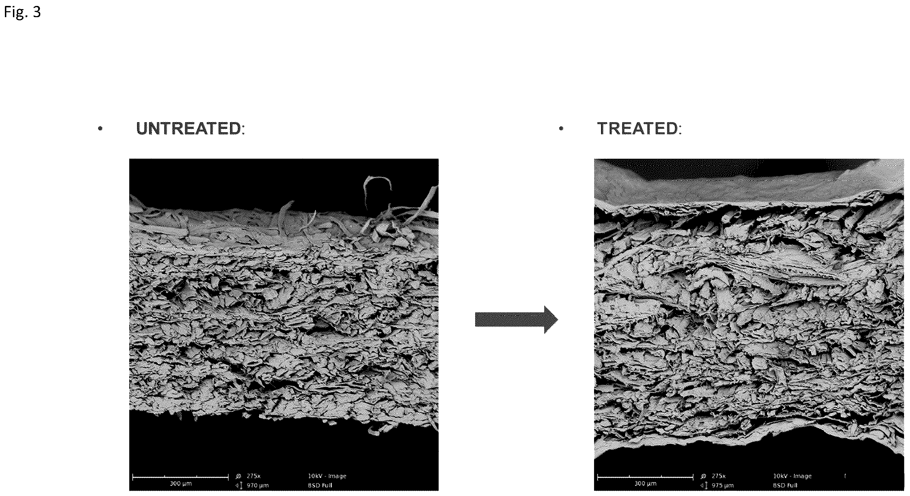

Fig. 3 shows a scanning electron micrograph of the sample of Example 2 wherein the parchmentized portion comprising non-fibrous cellulosic material can be observed at the top and the bottom surface. The remaining fibres in the core region remain unchanged.

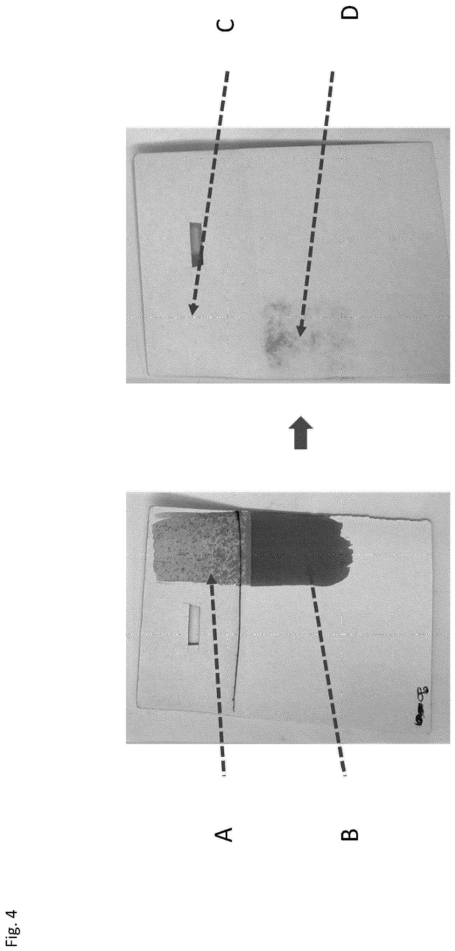

Fig. 4 shows the results of the grease resistance test carried out on the sample of Example 2. Above the blue line, the sample was subjected to the gelatinizing agent. Region A shows a treated area, which is clearer because the dye was not absorbed. Region B is untreated which is darker because the dye was absorbed. The right-hand side picture shows the other side of the board. Region C is the treated area, where the dye did not penetrate. Region D is untreated and thus the dye penetrated.

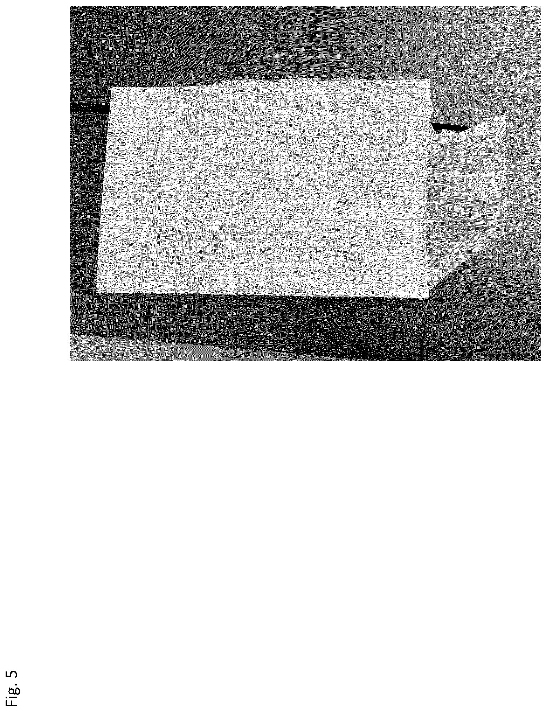

Fig. 5 shows a photography of the sample of Example 3, where the waterleaf partially covers the substrate board. The top portion of the board is uncovered by the waterleaf layer.

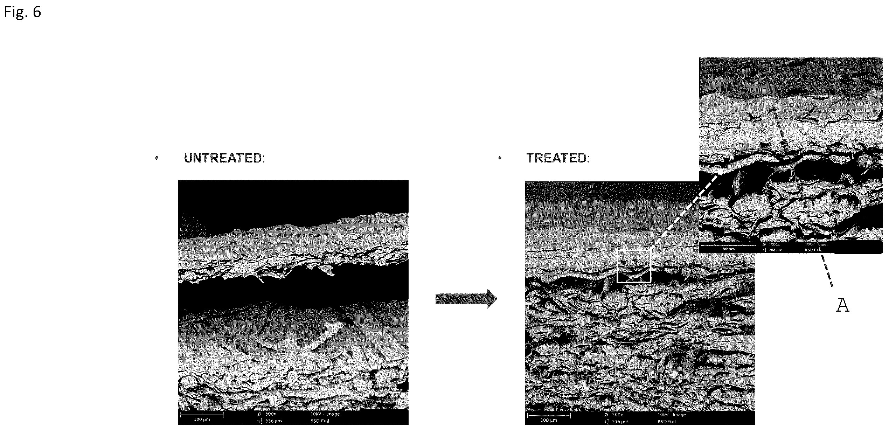

Fig. 6 shows a scanning electron micrograph of the sample of Example 3. As can be seen, the parchmentized portion comprising non-fibrous cellulosic material is located on the layer that was previously waterleaf, whereas the denser board substrate material is largely unchanged. The insert of region A further shows the parchmentized portion of the surface region comprising non-fibrous cellulosic material.

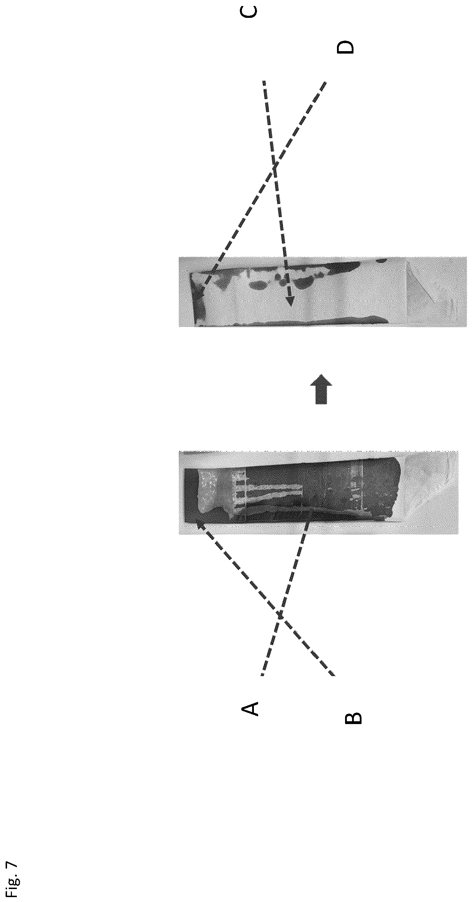

Fig. 7 shows the results of a grease resistance test carried out on the sample of Example 3. Region A shows a treated area, which is clearer because the dye was not absorbed. Region B is untreated which is darker because the dye was absorbed. The right-hand side picture shows the other side of the board. Region C is the treated area, where the dye did not penetrate. Region D is untreated and thus the dye penetrated.

### Detailed description of the invention

The present invention relates to a substrate comprising native cellulosic fibres and non-fibrous cellulosic material, wherein the substrate is recyclable by repulping with at least 50 wt% of the substrate being recoverable according to EN13430.

### Definitions

In the context of the present invention, the following definitions and test methods apply.

The term "fibre" as used herein refers to a material form characterized by an extremely high ratio of length to diameter. Generally, cellulose fibres have a very broad range of diameters and length based on fibre type and source of fibre. The average length of a wood pulp fibre as preferably used in the present invention is typically in the range of between from 0.3 mm to 3.5 mm, preferably from 0.3 mm to 3.0 mm, more preferably from 0.8 mm to 2.5 mm and even more preferably from 1.0 mm to 2.0 mm. The diameter of a wood pulp fibre is typically in the range of from 10 µm to 40 pm, preferably from 15 µm to 35 µm and more preferably from 20 µm to 30 µm. The aspect ratio (ratio of fibre length to fibre diameter) of a wood pulp fibre is therefore typically in the range of from 7.5 to 350, preferably from 7.5 to 300, more preferably from 10 to 200 and even more preferably from 20 to 150. The terms "fibre" and "filament" can be used interchangeably for the purposes of the present invention unless otherwise specifically indicated.

The term "cellulose-based" describes a substrate and/or material and/or article comprised substantially of cellulose. The material may be a fibre or a film. Cellulose materials are derived from manmade sources such as regenerated cellulose fibres or films or from natural sources such as fibres or pulp from woody plants or non-woody plants. Cellulose-based materials may comprise woven or non-woven cellulose. Non-woven cellulose based materials can be formed from many processes such as, for example, spin laying, carding, knitting, air laying and wet laying process. The basis weight of cellulose-based materials is usually expressed in weight per unit area, for example in grams per square meter (gsm = g/m²) or ounces per square foot (osf). Cellulose-based materials may comprise native cellulosic fibres and/or non-fibrous cellulosic material.

The term "native cellulosic fibres" refers to cellulose fibres from natural sources such as woody plants including deciduous and coniferous trees or non-woody plants including cotton, flax, esparto grass, kenaf, sisal, abaca, milkweed, straw, jute, hemp and bagasse. Preferably, the native cellulosic fibres are suitable for being dissolved by the gelatinizing agent. Suitable fibres for dissolution are, for example, hardwood fibres, softwood fibres or annual plant fibres. The native cellulosic fibres form a crystalline material comprising a crystallized fraction with the crystalline form of Cellulose I comprising all-parallel-oriented cellulose chains. The native cellulosic fibres may have been subjected to a pulping step.

The term "non-fibrous cellulosic material" specifies a material, which is obtained by submitting the native cellulosic fibres to reaction with a gelatinizing agent thereby at least partially dissolving the native cellulosic fibres, wherein the native cellulosic fibres disintegrate and form a gel-like viscous material, and subsequently eliminating the gelatinizing agent by washing with a reprecipitation agent, whereby the gel-like material precipitates to form a solid material. One process of dissolving native cellulosic fibres and reprecipitating them is referred to as the parchmentizing process. The solid material, which is referred to as the non-fibrous cellulosic material herein, is mostly amorphous and may comprise other forms of crystallized fraction such as a crystallized fraction with the crystalline form of Cellulose II comprising anti-parallel cellulose chains. The non-fibrous cellulosic material is preferably reprecipitated gelatinized cellulosic material.

The term "repulping" describes a process whereby a material that has previously undergone or been formed by at least one pulping step is subjected to a further pulping step.

The term "recyclable by repulping" describes a material which can be at least partially recovered and converted into a new material or object during a repulping step. Said material may be waste product. The term "recyclable" is generally described in line with EN13430. The expression "recyclable by repulping with at least 50 wt% being recoverable according to EN13430" therefore describes a material, which has been formed by or otherwise undergone at least one pulping step, and from which, upon subjecting it to a further pulping step, at least 50 wt% of the substrate can be recovered.

For ease of reference, the term "substrate" if not further specified refers to a cellulose-based substrate according to the first aspect of the present invention.

### Cellulose-based substrate

As mentioned above, in a first aspect the present invention relates to a cellulose-based substrate comprising native cellulosic fibres and non-fibrous cellulosic material, wherein the substrate is recyclable by repulping with at least 50 wt% of the substrate being recoverable according to EN13430.

In one embodiment of the first aspect, the substrate is recyclable by repulping with at least 55 wt% of the substrate being recoverable according to EN13430, more preferably with at least 60 wt% of the substrate being recoverable according to EN13430, more preferably with at least 65 wt% of the substrate being recoverable according to EN13430, more preferably with at least 70 wt% of the substrate being recoverable according to EN13430, more preferably with at least 75 wt% of the substrate being recoverable according to EN13430, more preferably with at least 80 wt% of the substrate being recoverable according to EN13430, more preferably with at least 85 wt% of the substrate being recoverable according to EN13430, and even more preferably with at least 90 wt% of the substrate being recoverable according to EN13430.

In one embodiment, the native cellulosic fibres contained in the substrate are recycled by repulping. In one embodiment, the wt% amount of the substrate that is recoverable during recycling by repulping is at most the amount of the native cellulosic fibres in the substrate. That is to say, the entire or most of the non-gelatinized cellulosic fibre material that is recoverable during recycling by repulping can be considered recoverable native cellulosic material in the sense of this invention. Native cellulosic material thus also includes fibres that have not or at a best partially undergone reaction with the gelatinizing agent. In this sense, "partial" reaction defines a situation that allows the fibres to essentially maintain its fibrous state.

In one embodiment, the substrate comprises a composite material comprising native cellulosic fibres and non-fibrous cellulosic material. The substrate may be an article and/or a material.

In one embodiment, the native cellulosic fibres and the non-fibrous cellulosic material are contained in a continuous cellulosic fibre matrix. The term "continuous cellulosic fibre matrix" refers to a cellulose material comprising native cellulosic fibres and non-fibrous cellulosic material, wherein the native cellulosic fibres are embedded in the non-fibrous cellulosic material, whereby the pores of the fibrous skeleton are blocked. The continuous cellulosic fibre matrix thus represents a dense material providing a cellulose continuum between the native cellulose fibres and the non-fibrous cellulosic material avoiding any voids at the interface between the native cellulose fibres and the non-fibrous cellulosic material. Therefore, the continuous cellulosic fibre matrix is a continuous, non-porous material. The continuous cellulosic fibre matrix may have high gas barrier properties, especially towards oxygen.

In one embodiment, the continuous cellulosic fibre matrix further comprises de-structured cellulosic fibres. The expression "de-structured cellulosic fibres" describes the periphery of a native cellulosic fibre that has been partially dissolved with a gelatinizing agent, whereby a progressive structure change from native cellulose to precipitated cellulose is generated. Such a progressive structure change means that the structure of the continuous cellulosic fibre matrix contains a structural gradient, wherein the crystalline structure of the native cellulosic fibre slowly changes into the mostly amorphous structure of the non-fibrous cellulosic material by formation of de-structured cellulosic fibres on the surface of the native cellulosic fibres. The de-structured cellulosic fibres thus surround the native cellulosic fibres and are interposed between the native cellulosic fibres and the non-fibrous cellulosic material. Preferably, the continuous cellulosic fibre matrix may consist of native cellulosic fibres, de-structured cellulosic fibres and non-fibrous cellulosic material. De-structured cellulosic fibres that substantially retain their fibrous state and have only minimally undergone reaction with the gelatinizing agent may also be considered native cellulosic fibre.

In one embodiment, the substrate may be a substantially 2D-shaped article, e.g. a sheet, or a 3D-shaped article. A shaped article is an article that has been at least partially prepared by at least one shaping step. A substantially 2D-shaped article is an article having significantly larger length and width dimensions than thickness dimensions. 2D-shaped articles, that encase 3-shaped objects and thereby take the appearance of a 3D-shaped article, e.g. a butter wrapping, or which are otherwise not self-supporting, will also be considered 2D-shaped articles for the purposes of this application.

In one preferred embodiment of the first aspect, the substrate is obtainable by a method comprising the steps of
(i) providing a cellulose-based substrate precursor material comprising native cellulosic fibres,
(ii) partially infiltrating the cellulose-based substrate precursor material with a gelatinizing agent, thereby submitting the cellulose-based substrate precursor material to a reaction with the gelatinizing agent to dissolve native cellulosic fibres, to give a partially treated cellulose-based substrate precursor material; and
(iii) submitting the partially treated cellulose-based substrate precursor material to a reprecipitation agent.

In step (i) of the preferred embodiment of the first aspect of the present invention, a cellulose-based substrate precursor material comprising native cellulosic fibres is provided. Said cellulose-based substrate has been formed by or otherwise undergone at least one pulping step. For ease of reference, the terms "precursor material" and "cellulose-based substrate precursor material" are used synonymously herein. The precursor material may comprise at least 50 wt% native cellulosic fibres, preferably at least 55% native cellulosic fibres, more preferably at least 60 wt% native cellulosic fibres, more preferably at least 65 wt% native cellulosic fibres, more preferably at least 70 wt% native cellulosic fibres, more preferably at least 75 wt% native cellulosic fibres, more preferably at least 80 wt% native cellulosic fibres, more preferably at least 85 wt% native cellulosic fibres, more preferably at least 90 wt% native cellulosic fibres, and even more preferably at least 95 wt% native cellulosic fibres. In one embodiment, the precursor material substantially or fully consists of native cellulosic fibres. Preferably, the precursor material comprises less than 1 wt% non-fibrous cellulosic material.

In one embodiment, the precursor material may be any of cardboard, waterleaf, absorbent paper, filter paper, cellulosic tissue.

In step (ii) of the preferred embodiment of the first aspect, the precursor material is partially infiltrated with a gelatinizing agent. "Partially infiltrated" herein means that only part of the native cellulosic fibres in the precursor material provided in step (i) are contacted with the gelatinizing agent, the contacting being carried out by means of infiltration. In one embodiment, 0.1-99% by mass of the native cellulosic fibres in the precursor material are contacted with the gelatinizing agent, more preferably 0.1-50%, more preferably 0.1-40%, more preferably 0.1-30%, more preferably 0.1-20%, more preferably 0.1-10%, more preferably 0.1-5%, even more preferably, 0.1-2%.

In one embodiment, the gelatinizing agent is provided in liquid form, e.g. in a solution. Said gelatinizing agent comprises at least one cellulose solvent selected from the group consisting of inorganic acids comprising sulfuric acid and phosphoric acid, Lewis acids comprising ZnCl₂ and Ca(SCN)₂, inorganic bases comprising NaOH, organic bases comprising N-methylmorpholine N-oxide, and ionic liquids comprising tetraalkylammonium salts. Preferably the gelatinizing agent comprises sulfuric acid.

In one embodiment, the precursor material is porous and capable of absorbing the gelatinizing agent, thereby leading to infiltration when the precursor material is contacted with the gelatinizing agent. The degree of infiltration may be controlled by means of controlling the porosity of the precursor material, controlling the basis weight of the precursor material, controlling the pressure of contacting gelatinizing agent (e.g. by impression with a roller), controlling the contacting time between the precursor material and the gelatinizing agent (e.g. by dipping the precursor material into the gelatinizing agent for a pre-determined time), the addition of an eliminating reprecipitation agent, etc.

In step (ii) of the preferred embodiment of the first aspect of the present invention, the precursor material provided in step (i) is partially infiltrated with a gelatinizing agent, and the precursor material is submitted to a reaction with the gelatinizing agent to dissolve native cellulosic fibres, to give a partially treated cellulose-based substrate precursor material. The reaction may be a chemical reaction. The degree to which the gelatinizing agent dissolves the native cellulosic fibres depends on the degree of infiltration, because the gelatinizing agent dissolves fibres that it directly contacts. Furthermore, the degree to which the reaction occurs depends on the nature and the concentration of the gelatinizing agent. For instance, if 10 wt% of the precursor material is infiltrated with the gelatinizing agent, the gelatinizing agent may dissolve 10 wt% or less of the native cellulosic fibres in the precursor material. In one embodiment, the gelatinizing agent reacts with substantially all of the native cellulosic fibres it directly contacts, thereby dissolving all native cellulosic fibres it directly contacts. The reaction with the gelatinizing agent and thus the dissolution of native cellulosic fibres yields a partially treated cellulose-based substrate precursor material. Said partially treated cellulose-based substrate precursor material thus comprises native cellulosic fibres and dissolved cellulosic fibres, the dissolved cellulosic fibres being a gel-like viscous material. Preferably, the partially treated cellulose-based substrate precursor material also comprises de-structured cellulosic fibres.

In step (iii) of the preferred embodiment of the first aspect of the present invention, the partially treated cellulose-based substrate precursor material is submitted to a reprecipitation agent. In one embodiment, all dissolved cellulosic fibres are submitted to the reprecipitation agent. In another embodiment, only part of the dissolved cellulosic fibres is submitted to the reprecipitation agent. Preferably at least the dissolved cellulosic fibres are submitted to the reprecipitation agent.

The reprecipitation agent interrupts the reaction between the gelatinizing agent and the native cellulosic fibres by eliminating the gelatinizing agent. Consequently, gel-like viscous material comprising dissolved cellulosic fibres precipitates into a solid material. This solid material is herein referred to as "non-fibrous cellulosic material". Said non-fibrous cellulosic material may be dry or wet. Preferably, the non-fibrous cellulosic material forms together with de-structured cellulosic fibres and native cellulosic fibres the continuous cellulosic fibre matrix.

In one embodiment, the reprecipitation agent is water. In such an embodiment "eliminating the gelatinizing agent" means diluting and washing away of the gelatinizing agent. Other reprecipitation agents may be used which otherwise eliminate the gelatinizing agent, e.g. by neutralizing it or otherwise rendering it inactive.

The preferred embodiment of the first aspect of the present invention may comprise a further step (iv), wherein the substrate is consolidated by a drying step. Optionally, the step (iv) may comprise a further separate washing step before the drying step.

In one embodiment, the precursor material provided in step (i) is provided in the form of a substrate precursor article. For ease of reference, the terms "substrate precursor article" and "precursor article" are used synonymously herein. The precursor article may be a substantially 2D-shaped article, e.g. a sheet, or a 3D-shaped article. In one embodiment, a shaping step may occur during steps (ii) or (iii), or otherwise before the substrate is consolidated. In another embodiment, a shaping step may occur after the substrate is consolidated.

In one embodiment, the precursor material provided in step (i) is provided in the form of a substrate precursor article having at least one surface region and a core region, and wherein the gelatinizing agent infiltrates the at least one surface region in step (ii). Following infiltration of the at least one surface region, the precursor article is submitted to the reprecipitation agent, so that the at least one surface region comprises non-fibrous cellulosic material. Preferably, following the submission to the reprecipitation agent, the at least one surface region comprises the continuous cellulosic fibre matrix.

In one embodiment, the gelatinizing agent does not infiltrate the core region. In this case, the native cellulosic fibres in the core region remain intact and do not dissolve.

The at least one surface region is substantially located at the surface of the article and the core region is substantially located in the bulk of the article.

In one embodiment, the surface region penetrates at most 50% relative to the total thickness of the article, more preferably at most 40%, more preferably at most 30%, more preferably at most 20%, more preferably at most 10%, more preferably at most 5%, more preferably at most 3%, and even more preferably at most 1%.

In one embodiment the surface region penetrates at most 5 cm into the article, more preferably at most 3 cm into the article, more preferably at most 1 cm into the article, more preferably at most 0.1 cm into the article, more preferably at most 1 mm into the article, more preferably at most 100 µm into the article, more preferably at most 50 µm into the article, and even more preferably at most 10 µm into the article.

The surface region may cover the entire surface of the precursor article or only a portion of it. Parts of the surface not covered by the surface region are herein referred to as "remaining surface". For instance, in one embodiment the precursor article is a substantially 2D-shaped article such as a sheet, wherein the surface region covers one side only and the other side is the remaining surface. In another embodiment, the precursor article is a concave 3D-shaped article, wherein the surface region only covers the inner surface of the concave article. The outer surface of the concave article is thus the remaining surface. In another embodiment, the precursor article is a cube-like article such as a box, and the surface region covers only one face. The other five faces thus constitute the remaining surface.

Control over the infiltration of the gelatinizing agent into the at least one surface region may be exerted by any suitable method. For instance, the gelatinizing agent is only contacted with the surface region and the remaining surface is not contacted. This may be achieved for instance by dipping the surface region into a solution containing the gelatinizing agent. Alternatively, the gelatinizing agent may be surface applied on one side of a sheet only, e.g. by rolling, spraying, kiss coating, transfer coating and/or metered size pressing. The degree of infiltration may be controlled by means of controlling the porosity of the precursor article, controlling the basis weight of the precursor article, controlling the pressure of the contacting gelatinizing agent (e.g. by impression with a roller), controlling the contacting time between the precursor material and the gelatinizing agent (e.g. by dipping the precursor material into the gelatinizing agent for a pre-determined time), the addition of an eliminating reprecipitation agent, etc.

In one embodiment, the precursor material provided in step (i) is provided in the form of a precursor article being a multilayer or a single layer article. The multilayer article may be multilayer sheet comprised of several layers being vertically stacked upon one another.

In one embodiment, the multilayer precursor article may comprise a first layer and a second layer, the first layer being positioned at the surface of the article, and wherein the first layer is more permeable to the gelatinizing agent than the second layer. Preferably, at least the first and second layer consist of a cellulose-based material. The permeability of the layers may depend, for instance, on the basis weight/density of the layers and/or the Bendtsen porosity of the layers. Consequently, the gelatinizing agent infiltrates deeper into the first layer and reacts with the native cellulosic fibres more strongly. Thus, upon submitting the multilayer precursor article to the reprecipitation agent, the first layer comprises more non-fibrous cellulosic material than the second layer. Preferably, the first layer comprises more continuous cellulosic fibre matrix.

In one embodiment, the second layer is substantially impermeable to the gelatinizing agent. Following step (iii), the second layer therefore does not comprise non-fibrous cellulosic material and/or continuous cellulosic fibre matrix. Preferably, the first layer comprises more than 90 wt% continuous cellulosic fibre matrix whereas the second layer comprises less than 10 wt% continuous cellulosic fibre matrix.

In one embodiment, the second layer is positioned at the surface of the precursor article. In another embodiment, the second layer is positioned below the first layer, substantially in the bulk of the article. The precursor article may comprise further layers which may be more permeable, less permeable or equally permeable to gelatinizing agent as the second layer.

In one embodiment, the precursor material provided in step (i) has a basis weight of at least 100 gsm, preferably at least 120 gsm, more preferably at least 140 gsm, more preferably at least 160 gsm, more preferably at least 180 gsm, more preferably at least 200 gsm, more preferably at least 220 gsm, more preferably at least 240 gsm, more preferably at least 260 gsm, and even more preferably at least 270 gsm. The precursor material may have a basis weight below 100 gsm, for example 70 gsm, but the barrier properties and/ or the recovery rate might be impacted.

In one embodiment, the precursor material provided in step (i) is provided in the form of a precursor article being a multilayer article, the multilayer article comprising a first layer and a second layer, the first layer being positioned at the surface of the article, and the first layer having at basis weight of at most 270 gsm, more preferably at most 260 gsm, more preferably at most 240 gsm, more preferably at most 220 gsm, more preferably at most 200 gsm, more preferably at most 180 gsm, more preferably at most 160 gsm, more preferably at most 140 gsm, more preferably at most 120 gsm, more preferably at most 100 gsm , more preferably at most 80 gsm, more preferably at most 60 gsm, more preferably at most 40 gsm, and even more preferably at most 20 gsm. The basis weight of the first layer may be as low as 6 gsm.

In one embodiment, the precursor material provided in step (i) has a Bendtsen porosity of 1000 ml/min or less, preferably 900 ml/min or less, more preferably 800 ml/min or less, more preferably 700 ml/min or less, more preferably 600 ml/min or less, more preferably 500 ml/min or less, more preferably 400 ml/min or less, more preferably 300 ml/min or less, more preferably 200 ml/min or less, and even more preferably 100 ml/min or less.

In one embodiment, the precursor material provided in step (i) is provided in the form of a precursor article being a multilayer article, the multilayer article comprising a first layer and a second layer, the first layer being positioned at the surface of the article, and the first layer having a Bendtsen porosity of at least 100 ml/min, more preferably at least 200 ml/min, more preferably at least 300 ml/min, more preferably at least 400 ml/min, more preferably at least 500 ml/min, more preferably at least 600 ml/min, more preferably at least 700 ml/min, more preferably at least 800 ml/min, more preferably at least 900 ml/min, and even more preferably at least 1000 ml/min. In one embodiment, the second layer has a Bendtsen porosity of at most 500 ml/min, more preferably at most 400 ml/min, more preferably at most 300 ml/min, more preferably at most 200 ml/min, more preferably at most 100 ml/min, more preferably at most 50 ml/min, and even more preferably at most 30 ml/min. The permeability of the layers correlates with their porosity. Preferably, the porosity of the first and second layers are therefore configured in such a way that the first layer has a higher Bendtsen porosity than the second layer. The Bendtsen porosity may be measured according to ISO 5636-3:2013.

In one embodiment, the substrate is at least 90 wt% preferably at least 95 wt% and more preferably 100 wt% compostable according to EN13432 and/or ASTM D6400. The expression "compostable" is generally defined in line with the EN13432 standard. The term "compostable substrate" designates a substrate for which at least 90% of the materials have to be broken down by biological action within 6 months under the standard test method conditions, thereby meeting EN13432. The expression "compostable" when applied to a material or a product means that the material, or the entire product, will both biodegrade and disintegrate. By "biodegrade" it is meant that the chemical structure or the material breaks down under the action of micro-organisms, while by "disintegrates" it is meant that the material, or the product made from it, will physically fall apart into fine visually indistinguishable fragments, at the end of a typical composting cycle. In order to be considered a compostable polymer material, the polymer chains must break down under the action of the micro-organisms, so that total mineralization is achieved (i.e. conversion of the material into CO₂, water, inorganic compounds and bio mass under aerobic conditions) at a high rate compatible with the normal composting process of vegetable waste.

In one embodiment, the substrate is fully compostable. In one embodiment, the portion of the substrate that is not recoverable through recycling by repulping is at least 90 wt% compostable according to EN13432 and/or ASTM D6400.

In one embodiment, the 3D-shaped substrate is plastic-free.

In one embodiment, the 3D-shaped substrate is food contact approved according to any of EU 1935/2004, BfR 36, BfR 36-1, BfR 36-2, FDA 21 CFA §176-170 & 176-180.

In one embodiment, the substrate is grease-proof according to TAPPI T454.

In one embodiment, the substrate is waterproof as determined according to TAPPI T441 with 30 seconds without water leakage, preferably with 60 seconds without water leakage, more preferably with 180 seconds without water leakage, more preferably with 300 seconds without water leakage, more preferably with 600 seconds without water leakage, and even more preferably with 1800 seconds without water leakage.

In one embodiment, the substrate has an oxygen transmission rate of less than 200 cm³/(m² × day), more preferably less than 180 cm³/(m² × day), more preferably less than 160 cm³/(m² × day), more preferably less than 140 cm³/(m² × day), more preferably less than 120 cm³/(m² × day), more preferably less than 120 cm³/(m² × day), more preferably less than 100 cm³/(m² × day), more preferably less than 80 cm³/(m² × day), more preferably less than 60 cm³/(m² × day), more preferably less than 40 cm³/(m² × day), and even more preferably less than 20 cm³/(m² × day).

In one embodiment, the substrate only comprises natural polymers. In the context of the present invention, natural polymers are naturally occurring, non-petroleum-based polymers, such as rayon and hyaluronic acid, starch or modified starch. Said natural polymers may have been formed by a biological organism and extracted, or they may be chemically or physically modified by a subsequent process to convert them into the desired shape or form. In a preferred embodiment, the substrate does not comprise petroleum-based synthetic polymer adhesives or glues.

In one embodiment, the substrate is a packaging article. A packaging article is an article that is configured for packaging a second article. The packaging article is not particularly limited in size and/or shape.

In one embodiment, the substrate is a food packaging article. In a food packaging article, the second article is food or a food ingredient. The food packaging is not particularly limited and can be used for preserving food such as, for example, oxygen sensitive food. The food packaging article may be a substantially 2D-shaped article, such as a butter wrapping, or 3D-shaped article, such as an egg-box or a soup bowl. The packaging article may for example be selected from any of a beverage container, a coffee capsule, a coffee pad, a chocolate packaging and a biscuit packaging.

In one embodiment, the packaging article may be selected from any of a cosmetic packaging article, a medical packaging article, or an electronics packaging article.

### Method for preparing a cellulose-based substrate

In a second aspect, the present invention relates to a method of preparing a substrate according to the first aspect of the present invention, the method comprising the steps of
(i) providing a cellulose-based substrate precursor material comprising native cellulosic fibres,
(ii) partially infiltrating the cellulose-based substrate precursor material with a gelatinizing agent, thereby submitting the cellulose-based substrate precursor material to a reaction with the gelatinizing agent to dissolve native cellulosic fibres, to give a partially treated cellulose-based substrate precursor material; and
(iii) submitting the partially treated cellulose-based substrate precursor material to a reprecipitation agent.

In one embodiment, any of the steps (i)-(iii) may be further characterised in the embodiments pertaining to the steps (i)-(iii) disclosed above. In addition, the method of the second aspect of the present invention may comprise a further step (iv), wherein the substrate is consolidated by a drying step. Optionally, the step (iv) may comprise a further separate washing step before the drying step.

### Processing the cellulose-based substrate

In a third aspect, the present invention relates to a method of processing the substrate according to the first aspect of the present invention.

In one embodiment, the processing comprises any of printing, laminating, painting, spraying, binding, gluing, varnishing, impregnating, soaking, and/or binding.

In one preferable embodiment, the substrate is a food packaging article, and the processing comprises printing a label on the food packaging article.

### Use of a cellulose-based substrate

In a fourth aspect, the present invention relates to the use for packaging of a substrate according to the first aspect of the present invention.

In one embodiment, such a use may be directed to any of shipping, storing, protecting, preserving, and/or presentation of a packaged article (e.g. gift wrapping).

In one embodiment, the use for packaging is directed towards packaging food such as single serve beverage capsules, packaging cosmetics, packaging a medical article, and/or packaging electronics.

Based on the foregoing discussion, the following examples, and without wishing to be bound by theory, the inventors believe that the problem has been solved to provide a substrate with improved recyclability that may be used for packaging, without compromising the advantageous properties of parchment-based materials.

### Examples

In the examples, the following standard chemicals and conditions are used.

Material properties of the board-type precursor article are given in tabular form below (Table 1)

**Table 1 | Material properties of board-type precursor article**

| Property | Average |
|---|---|
| Thickness (pm) | 566 |
| Basis weight (g/m²) | 271 |
| Bekk smoothness (s) | 1.5 |
| Bendtsen porosity | 453 |

Waterleaf layer: Highly porous sheet with a thickness of approximately 50 µm.

Gelatinizing agent: sulfuric acid having a concentration of from 70% to 75%.

Method of impregnation: In one example the cellulosic substrate is dipped in a sulfuric acid bath, and in another example sulfuric acid is deposited at one corner of the sample, and a silicone roll is used to spread the acid on the surface of the sample on the same side.

Imaging methods: Scanning electron microscopy (SEM) and/or digital photography.

The Bendtsen porosity was measured according to ISO 5636-3:2013.

The Bekk smoothness was measured according to ISO 5627:1995.

Grease resistance tests were carried out in accordance with Tappi T-454:2015.

Recyclability tests were carried out according to EN 13430. A given sample is cut into smaller pieces of around 25cm² and is repulped in a disintegrator. The repulped sample screened on a Somerville-type equipment according to test method TAPPI/ANSI T 275 sp-18 using a 0.15 mm slotted plate. The different recovered fractions are used to calculate the recoverable portion.

### Example 1

Sulfuric acid was deposited at one corner of a board-type precursor, and a silicone roll was used to spread the acid on the surface of the sample on the same side. The sample was then rinsed under running water and dried. Figure 1 shows a scanning-electron micrograph of a cross-sectional view of the sample. As can be seen, only the surface region is parchmentized, whereas the core region remains substantially unchanged.

The sample was then subjected to a grease resistance test. An oil-based dye was spread on the treated side and the back side was observed. As can be seen in Figure 2, the dye only penetrated the untreated area.

### Example 2

A board-type precursor article was dipped in a sulfuric acid bath. The sample was then rinsed under running water and dried. In this process, both sides of the board are treated.

Recyclability of the substrate was then tested and compared with industrial samples. Results for these samples can be seen in Table 2 below.

**Table 2 | Recyclability test according to EN13430**

| Recycled article | Recovered fibres (%, relative to the total mass of the substrate) |
|---|---|
| Waterleaf (base material for parchment) | 99.6 |
| Parchment (industrial sample) | No recoverable material |
| Untreated board (board-type precursor article) | 99.4 |
| 2-side treated substrate | 83.5 |

Figures 3-4 show cross-sectional SEM and oil resistance tests of the sample of Example 2 respectively.

### Example 3

A two-layer precursor article was prepared by placing a waterleaf layer on one face of the board-type precursor article, so that the waterleaf layer covered roughly only 80% of the board-type precursor article. The total thickness of the precursor article was, where covered by the waterleaf, ca 616 µm, and where not covered 566 µm.

Sulfuric acid was deposited on the face of the board-type precursor including the waterleaf layer on the side of the sample including the board only. A silicone roll was then used to spread the acid toward the opposite side of the sample by rolling the acid over the waterleaf and pressing the gel at the same time. The sample was then rinsed under running water and dried.

Figures 5-7 show photography, cross-sectional SEM and oil resistance tests of the sample of Example 3 respectively.

## Claims

1. A cellulose-based substrate comprising native cellulosic fibres and non-fibrous cellulosic material, wherein the substrate is recyclable by repulping with at least 50 wt% of the substrate being recoverable according to EN13430.

2. A cellulose-based substrate according to claim 1, wherein the substrate is obtainable by a method comprising the steps of:
(i) providing a cellulose-based substrate precursor material comprising native cellulosic fibres;
(ii) partially infiltrating the cellulose-based substrate precursor material with a gelatinizing agent, thereby submitting the cellulose-based substrate precursor material to a reaction with the gelatinizing agent to dissolve native cellulosic fibres, to give a partially treated cellulose-based substrate precursor material;
(iii) submitting the partially treated cellulose-based substrate precursor material to a reprecipitation agent.

3. A cellulose-based substrate according to claim 2, wherein the cellulose-based substrate precursor material provided in step (i) is provided in the form of a substrate precursor article having at least one surface region and a core region, and wherein the gelatinizing agent infiltrates the at least one surface region.

4. A cellulose-based substrate according to claims 2 or 3, wherein the cellulose-based substrate precursor material provided in step (i) is provided in the form of a substrate precursor article being a multilayer or a single layer article.

5. A cellulose-based substrate according to claim 4, wherein the substrate precursor article is a multilayer article comprising a first layer and a second layer, the first layer being positioned at the surface of the article, and wherein the first layer is more permeable to the gelatinizing agent than the second layer.

6. A cellulose-based substrate according to any of claims 2-5, wherein the cellulose-based substrate precursor material provided in step (i)
- has a basis weight of at least 100 gsm, and/or
- a Bendsten porosity of 1000 ml/min or less.

7. A cellulose-based substrate according to any of claims 1-6, wherein the substrate is recyclable by repulping with at least 75 wt% of the substrate being recoverable according to EN13430, more preferably with at least 90 wt% of the substrate being recoverable according to EN13430.

8. A cellulose-based substrate according to any of claims 1-7, wherein the substrate
- is at least 90 wt% compostable according to EN13432, and/or
- is food contact approved according to any of EU 1935/2004, BfR 36, BfR 36-1, BfR 36-2, FDA 21 CFA §176-170 & 176-180.

9. A cellulose-based substrate according to any of claims 1-8, wherein the substrate
- is greaseproof according to TAPPI T454, and/or
- is waterproof as determined according to TAPPI T441 with 60 seconds without water leakage, and/or
- has an oxygen transmission rate of less than 200 cm3/(m2 × day), when determined at 23°C and 50% relative humidity.

10. A cellulose-based substrate according to any of claims 1-9, wherein the substrate only comprises natural polymers.

11. A cellulose-based substrate according to any of claims 1-10, wherein the substrate is a packaging article, further optionally wherein the substrate is any of a food packaging article, a cosmetic packaging article, a medical packaging article, or an electronics packaging article.

12. A method for preparing a cellulose-based substrate according to any of claims 1-11, the method comprising the steps of
(iv) providing a cellulose-based substrate precursor material comprising native cellulosic fibres,
(v) partially infiltrating the cellulose-based substrate precursor material with a gelatinizing agent, thereby submitting the cellulose-based substrate precursor material to a reaction with the gelatinizing agent to dissolve native cellulosic fibres, to give a partially treated cellulose-based substrate precursor material;
(vi) submitting the partially treated cellulose-based substrate precursor material to a reprecipitation agent.

13. A method according to claim 12, wherein the reprecipitation agent of step (iii) is water.

14. A method for processing the cellulose-based substrate of any of claims 1-11, wherein the processing comprises any of printing, laminating, coating, painting, spraying, binding, gluing, varnishing, impregnating, soaking, and/or binding.

15. Use of a cellulose-based substrate according to any of claims 1-11 for packaging, preferably for packaging food, electronics, cosmetic and/or medical products.
